# EUROPÄISCHE PATENTSCHRIFT

(11) **EP 1 778 017 B1**
(45) Veröffentlichungstag und Bekanntmachung des Hinweises auf die Patenterteilung: **27.10.2010**
(21) Anmeldenummer: 06742661.9
(22) Anmeldetag: 24.04.2006
(51) Int. Cl.: A23B 9/26, A23L 1/36, A23L 3/3508

(54) **VERFAHREN ZUR VERLÄNGERUNG DER HALTBARKEITSDAUER DER FRÜCHTE VON ÖLPFLANZEN**
METHOD FOR PROLONGING THE STORAGE LIFE OF THE FRUITS OF OIL PLANTS
PROCEDE POUR PROLONGER LA DUREE DE CONSERVATION DES FRUITS DE PLANTES OLEAGINEUSES

(30) Priorität: 22.04.2005 DE 102005018772
(43) Veröffentlichungstag der Anmeldung: 02.05.2007
(73) Patentinhaber: Raps GmbH & Co. KG, 95326 Kulmbach (DE)
(72) Erfinder: WEINREICH, Bernd, 82377 Penzberg (DE); OTTO, Frank, 85402 Kranzberg (DE); GRÜNER-RICHTER, Sabine, 85354 Freising-Hohenbachern (DE); KNOBLOCH, Annegret, 96224 Burgkundstadt (DE)
(74) Vertreter: Beyer, Andreas
(86) Internationale Anmeldenummer: PCT/EP2006/003763
(87) Internationale Veröffentlichungsnummer: WO 2006/111425

(56) Entgegenhaltungen:
- EP-A- 1 099 383
- DE-A1- 4 202 320
- US-A- 6 066 351
- US-A- 6 156 361
- DATABASE WPI Section Ch, Week 199835 Derwent Publications Ltd., London, GB; Class D13, AN 1998-406028 XP002396961 & JP 10 165091 A (TABATA CO LTD) 23. Juni 1998 (1998-06-23)

## Beschreibung

Die vorliegende Erfindung betrifft ein Verfahren zur Verlängerung der Haltbarkeitsdauer der Früchte von Ölpflanzen.

Als Ölpflanzen werden Pflanzen wie z.B. Nüsse und Getreidesorten bezeichnet, deren Samen fette Öle (Fette) enthalten und die meist als Nutzpflanzen angebaut werden. Öle und Fette aus Ölpflanzen werden zum Kochen und bei der Herstellung von Nahrungsmitteln, Seifen, Schmierfetten und Kosmetika eingesetzt. Die meisten aus den Früchten der Ölpflanzen gewonnenen Öle und Fette sind reich an einfach oder mehrfach ungesättigten Fettsäuren, was sie zu einem wichtigen Bestandteil der menschlichen Ernährung macht. Früchte von Ölpflanzen sind beispielsweise Sojabohnen, Kokosnüsse, Erdnüsse, Haselnüsse, Mandeln, Walnüsse, Pekanüsse, Macadamianüsse, Sesamkerne, Kürbiskerne sowie Sonnenblumen- und Rapssamen.

Der erwähnte hohe Anteil an einfach oder mehrfach ungesättigten Fettsäuren macht die Früchte der Ölpflanzen anfällig für eine Oxidation durch Luftsauerstoff. Die Oxidationswahrscheinlichkeit ist dabei umso höher, je mehr ungesättigte Fettsäuren in einer Ölpflanzenfrucht enthalten sind. Infolge der Oxidation neigen die Ölpflanzenfrüchte dazu ranzig zu werden, wodurch ihr Geschmack und Geruch beeinträchtigt werden. Vom Verbraucher wird das Auftreten ranziger Geruchsnoten bereits in einem frühen Stadium des durch Oxidation auftretenden Verderbs des in einer Ölpflanzenfrucht enthaltenen Fettes und/oder Öles wahrgenommen und bestimmt deshalb maßgeblich die Haltbarkeitsdauer von Ölpflanzenfrüchten und daraus hergestellten Lebensmitteln.

Das geschilderte Problem ist seit langem bekannt und es existiert daher bereits eine Reihe von Vorschlägen zu dessen Beseitigung. So beschreibt die US-amerikanische Patentschrift 2 631 938 ein Verfahren zur Umhüllung von Nüssen mit einem geschlossenen, essbaren Film, der der Verlängerung der Haltbarkeit dient und Antioxidantien enthalten kann. Der genannte Film wird durch zwei aufeinanderfolgende wässrige Reaktionsbäder auf den Nüssen erzeugt, woraufhin die Nüsse getrocknet werden.

Die veröffentlichte amerikanische Patentanmeldung 2003/0082282 A1 beschreibt ein Verfahren zur Erzeugung von glänzenden Überzügen auf Lebensmitteln und zum Schutz von Nüssen vor Oxidation. Der glänzende Überzug besteht aus Soja- oder Molkeproteinen in Kombination mit Zuckerstoffen wie Laktose, Maltose oder Sucrose. Die Verlängerung der Haltbarkeit bei Nüssen wird durch Erzeugen eines gewissen Abriebs von der Nussoberfläche bei gleichzeitigem Kontakt mit einer wässrigen Lösung der Überzugsmaterialien erreicht. Zur Fertigstellung müssen die Produkte getrocknet werden.

Aus der veröffentlichten europäischen Patentanmeldung EP 1 099 383 A2 ist ein Verfahren zur Haltbarmachung von Hanfsamen bekannt, bei dem das Ausgangsgut zunächst zerkleinert wird, dann mit einem Antioxidationsmittel beaufschlagt wird und schließlich wärmebehandelt wird. Das Antioxidationsmittel kann Carnosol oder Carnosolsäure enthalten. Die vorzugsweise erst nach der Zugabe des Antioxidationsmittels erfolgende Wärmebehandlung dient nicht nur einer besonders effektiven Unterdrückung störender Oxidationsprozesse, sondern auch der Erzeugung geschmacksverbessernder Röststoffe sowie einer Verringerung des Wasseranteils.

Die zuvor genannten, bekannten Verfahren zur Verminderung einer Oxidation von Lebensmitteln bzw. Ölpflanzenfrüchten basieren auf der Erzeugung eines schützenden Überzugs auf der Oberfläche der Lebensmittel bzw. Ölpflanzenfrüchte und erfordern zudem nach der Aufbringung des schützenden Überzuges eine Trocknung der so behandelten Lebensmittel bzw. Ölpflanzenfrüchte. Dieser Trocknungsschritt kostet Zeit und Energie und erhöht somit die Kosten des entsprechenden Produkts, zudem bevorzugen Konsumenten Ölpflanzenfrüchte ohne einen Überzug.

Der Erfindung liegt daher die Aufgabe zugrunde, ein Verfahren zur Verlängerung der Haltbarkeitsdauer der Früchte von Ölpflanzen anzugeben, welches eine Verlängerung der Haltbarkeitsdauer der Ölpflanzenfrüchte ohne einen schützenden Überzug ermöglicht und welches vorzugsweise keinen separaten Trocknungsschritt erfordert. Insbesondere soll das bereitzustellende Verfahren es ermöglichen, die Verlängerung der Haltbarkeitsdauer der Früchte von Ölpflanzen ohne eine Zerkleinerung dieser Früchte zu erzielen, d.h. es sollen insbesondere ganze Früchte erfolgreich mit dem bereitzustellenden Verfahren behandelbar sein. Schließlich soll eine geschmackliche Veränderung des Ausgangsproduktes möglichst vermieden werden, insbesondere sollen in den zu behandelnden Ölpflanzenfrüchten keine Röstnoten erzeugt werden.

Diese Aufgabe ist erfindungsgemäß durch ein Verfahren zur Verlängerung der Haltbarkeitsdauer der Früchte von Ölpflanzen gelöst, das die im Patentanspruch 1 angegebenen Schritte umfasst. Mit diesem Verfahren werden die bereitgestellten Früchte mit Carnosol und/oder Carnosolsäure derart imprägniert, dass die behandelten Früchte einen Gehalt an Carnosol und/oder Carnosolsäure von 0,1 bis 1000 ppm aufweisen. Die aus dem erfindungsgemäßen Verfahren resultierende haltbarkeitsverlängernde Wirkung ergibt sich durch die deutlich verbesserte Diffusion des Carnosols und/oder der Carnosolsäure in die Ölpflanzenfrüchte hinein.

Carnosol und Carnosolsäure sind Antioxidantien natürlichen Ursprungs, die beispielsweise in der Rosmarinpflanze (Rosmarinus officinalis) oder im Salbei (Salvia officinalis) vorkommen. Überraschend hat sich herausgestellt, dass Carnosol und/oder Carnosolsäure gut in die Matrix von Ölpflanzenfrüchten penetrieren, so dass sie ihre antioxidative Wirkung in der mit ihnen imprägnierten Ölpflanzenfrucht entfalten können, woraus völlig ohne schützenden Überzug eine im Vergleich zu unbehandelten Ölpflanzenfrüchten signifikant erhöhte Haltbarkeit resultiert. Vorzugsweise beträgt der Gehalt an Carnosol und/oder Carnosolsäure in den behandelten Ölpflanzenfrüchten 1 bis 500 ppm.

Das erfindungsgemäße Verfahren gestattet mit seiner deutlich verbesserten Durchdringungsfähigkeit insbesondere das Imprägnieren ganzer, d.h. unverkleinerter Ölpflanzenfrüchte. Die zu imprägnierenden Früchte können jedoch auch in halbierter, geviertelter, gehackter, gehobelter, geschroteter oder gemahlener Form bereitgestellt werden.

Gemäß einer bevorzugten Ausgestaltung des erfindungsgemäßen Verfahrens erfolgt der Schritt des Imprägnierens unter Verwendung eines carnosol- und/oder carnosolsäurehaltigen Extraktes, der beispielsweise aus Rosmarin oder Salbei hergestellt worden ist. Unabhängig davon, ob das Carnosol und/oder die Carnosolsäure in Form eines Extraktes verwendet werden oder nicht, wird bei dem Schritt des Imprägnierens Carnosol und/oder Carnosolsäure in einem Anteil von 0,001 Gew.-% bis 5 Gew.-% bezogen auf die Masse der zu imprägnierenden Früchte verwendet.

Bei dem erfindungsgemäßen Verfahren werden die zu behandelnden Früchte mit Carnosol und/oder Carnosolsäure in Gegenwart eines überkritischen Gases mit Carnosol und/oder Carnosolsäure in Kontakt gebracht. In dem überkritischen Gas löst sich Carnosol und/oder Carnosolsäure und penetriert auf diese Weise besonders gut in die Matrix der zu imprägnierenden Früchte, d.h. das überkritische Gas transportiert quasi das Imprägnierungsmittel in die Matrix hinein. Als Gas kann Kohlendioxid, ein Kohlenwasserstoff, insbesondere Methan, Ethan, Propan, Butan, Ethen, Propen oder ein halogenierter Kohlenwasserstoff, ein Ether, ein Inertgas, insbesondere Stickstoff, Helium oder Argon, ein gasförmiges Oxid, insbesondere Distickstoffoxid oder Schwefeldioxid, Ammoniak oder auch eine Mischung aus zwei oder mehreren der vorgenannten Gase verwendet werden, wobei es dann ausreicht, wenn nur ein Bestandteil einer Gasmischung in überkritischem Zustand vorliegt. Bevorzugt sind insbesondere Gasmischungen, die CO₂ enthalten, wobei zumindest das CO₂ in überkritischem Zustand vorliegt. Mit der Verwendung von CO₂ werden zugleich die Vorteile erreicht, die sich aus dem Einsatz eines Inertgases ergeben. Um eine ausreichende Löslichkeit des Imprägnierungsmittels (Carnosol und/oder Carnosolsäure) in dem überkritischen Gas zu gewährleisten, erfolgt der Schritt des Imprägnierens vorzugsweise bei einem Druck im Bereich von 5 bis 1000 bar, insbesondere bei einem Druck im Bereich von 10 bis 500 bar, und besonders bevorzugt bei einem Druck im Bereich von 50 bis 350 bar. Die Temperatur beim Schritt des Imprägnierens liegt besonders bevorzugt in einem Bereich von +40 bis +70°C.

Bei dem vorgenannten Verfahren, bei dem der Schritt des Imprägnierens in Gegenwart eines überkritischen Gases erfolgt, werden der gewählte Druck und die gewählte Temperatur für eine vorbestimmte Zeitdauer aufrechterhalten. Diese Zeitdauer muss gegebenenfalls durch Versuche ermittelt werden und bestimmt sich nach dem Gehalt an Carnosol und/oder Carnosolsäure, der nach Abschluss des Behandlungsverfahrens in den imprägnierten Ölpflanzenfrüchten enthalten sein soll.

Eine weitere bevorzugte Möglichkeit zum Imprägnieren bereitgestellter Früchte mit Carnosol und/oder Carnosolsäure besteht darin, dass Carnosol und/oder Carnosolsäure, vorzugsweise in Form eines carnosol- und/oder carnosolsäurehaltigen pflanzlichen Extraktes, einem statischen Mischer zugeführt wird, dort mit überkritischem Gas, insbesondere CO₂, vermischt und anschließend bei Atmosphärendruck - vorzugsweise wiederum unter einer Inertgasatmosphäre - auf die zu imprägnierenden Früchte gesprüht wird, um eine gewünschte Beladung der zu behandelnden Früchte mit Carnosol und/oder Carnosolsäure zu erzielen. Als überkritisches Gas kann jedes der zuvor im Zusammenhang mit der oben zuerst genannten Verfahrensalternative genannten Gase oder Gasmischungen zum Einsatz kommen.

Durch Vermischen von Carnosol und/oder Carnosolsäure mit überkritischem Gas in einem statischen Mischer und anschließendes Versprühen auf die zu behandelnden Früchte unter Atmosphärendruck wird ein äußerst feinteiliger Nebel des Imprägnierungsmittels gebildet, der besonders gut in die zu behandelnden Ölpflanzenfrüchte eindringen kann und diese somit mit dem Imprägnierungsmittel belädt.

Im Folgenden sollen die zwei zuvor beschriebenen Möglichkeiten zum Imprägnieren der zu behandelnden Ölpflanzenfrüchte noch etwas näher erläutert werden. Gemäß der ersten, überkritische Gase verwendenden Alternative werden zunächst Ölpflanzenfrüchte in beliebiger Form bereitgestellt, sodann wird Carnosol und/oder Carnosolsäure, vorzugsweise in Form eines Carnosolsäure enthaltenden pflanzlichen Extraktes, in einer solchen Menge zugefügt, dass der Anteil an Carnosol und/oder Carnosolsäure 0,001 bis 5 Gew.-% bezogen auf die Masse der zu behandelnden Ölpflanzenfrüchte beträgt. Der Anteil an Carnosol und/oder Carnosolsäure wird dabei so gewählt, dass in den behandelten Ölpflanzenfrüchten später ein Gehalt von Carnosol und/oder Carnosolsäure von 0,1 bis 1000 ppm, vorzugsweise von 1 bis 500 ppm resultiert. Sodann werden die Ölpflanzenfrüchte gemeinsam mit dem Imprägnierungsmittel in einem Druckbehälter vorgelegt, der mit überkritischem Gas gefüllt wird. Die gewünschten Druck- und Temperaturbedingungen werden eingestellt und für eine vorbestimmte Zeitdauer aufrechterhalten. Danach wird der Druckbehälter auf Atmosphärendruck und Raumtemperatur zurückgeführt, womit die Behandlung der Ölpflanzenfrüchte beendet ist. Ein Trocknungsschritt ist nicht erforderlich.

Gemäß der zweiten Alternative werden wie zuvor die zu behandelnden Ölpflanzenfrüchte in beliebiger, vorzugsweise jedoch feinteiliger Form bereitgestellt. Das Imprägnierungsmittel mit einem Carnosol- und/oder Carnosolsäureanteil gemäß der beiden vorhergehenden Alternativen wird aus einem Vorlagebehälter einem statischen Mischer zugeführt. Vorzugsweise wird als Imprägnierungsmittel ein carnosol- und/oder carnosolsäurehaltiger pflanzlicher Extrakt verwendet. In dem statischen Mischer wird das Imprägnierungsmittel mit einem überkritischen Gas intensiv durchmischt und anschließend bei Atmosphärendruck auf die zu behandelnden Ölpflanzenfrüchte gesprüht. Als Gas wird vorzugsweise Kohlendioxid verwendet. Durch die beim Versprühen des Gemisches aus Imprägnierungsmittel und überkritischem Gas auftretende Entspannung entsteht ein äußerst feinteiliger Nebel des Imprägnierungsmittels, der die zu behandelnden Früchte sehr gut penetriert und dadurch die Früchte mit dem Imprägnierungsmittel belädt. Auch gemäß dieser Verfahrensalternative kann der Be- bzw. Versprühvorgang unter einer Inertgasatmosphäre stattfinden. Eine Trocknung der solchermaßen behandelten Ölpflanzenfrüchte ist aufgrund der Feinteiligkeit des erzeugten Nebels und der guten Penetration in die zu behandelnden Früchte nicht erforderlich.

Unabhängig von der gewählten Imprägnierungsart ergeben sich durch Einsatz des erfindungsgemäßen Verfahrens Ölpflanzenfrüchte mit einem Gehalt an Carnosol und/oder Carnosolsäure, der die solchermaßen behandelten Ölpflanzenfrüchte nachweislich deutlich weniger anfällig für eine Oxidation macht. Der Grad der Oxidation unter definierten Lagerbedingungen kann beispielsweise durch die Bestimmung der Peroxidzahl nach Wheeler, durch einen Ranzimattest oder auch durch eine sensorische Beurteilung bestimmt werden.

Untenstehend wird nunmehr ein Verfahrensbeispiel für die ein überkritisches Gas verwendende Verfahrensvariante gegeben und es wird aufgezeigt, wie sich dadurch die Oxidationsanfälligkeit der behandelten Ölpflanzenfrüchte drastisch verringert.

### Verfahrensbeispiel Variante 1:

1 kg gehackte Haselnüsse werden mit 2g Carnosol bzw. carnosolsäurehaltigem Extrakt in einem Druckbehälter vorgelegt. Der Extrakt enthält 20 Gew.-% Carnosolsäure und befindet sich in einer Filtertasche, damit etwaige im überkritischen Gas unlösliche Bestandteile im Verlauf des Prozesses nicht in das Produkt gelangen. Der Druckbehälter wird mit verdichtetem Kohlendioxid bis zum Erreichen eines Druckes von 300 bar bei einer Temperatur von 60 °C gefüllt. Diese Bedingungen werden über einen Zeitraum von 10 Minuten aufrechterhalten. Anschließend wird der Druckbehälter auf Atmosphärendruck entspannt und auf Raumtemperatur abgekühlt.

Die so behandelten Nüsse enthalten einen Carnosolsäureanteil von 50 ppm. Bei einer Lagerung bei 80 °C ergeben sich für die behandelten Nüsse im Vergleich zu einer unbehandelten Kontrollprobe folgende Peroxidzahlen, die die Wirksamkeit des erfindungsgemäßen eindrucksvoll bestätigen:

| Lagerdauer [d] | Peroxidzahl der behandelten Probe | Peroxidzahl der unbehandelten Probe |
|---|---|---|
| 1 | 0 | 0 |
| 7 | 0 | 7 |
| 9 | 0 | 150 |
| 14 | 2 | 212 |

Selbst nach einer Lagerdauer von 14 Tagen bei stark erhöhter Temperatur tritt bei mit dem erfindungsgemäßen Verfahren behandelten Nüsse noch praktisch keine Oxidation auf, während die unbehandelten Nüsse bereits deutliche Oxidation zeigen.

### Verfahrensbeispiel Variante 2:

1 kg gehackte Haselnüsse sollen mit 50g carnosol- bzw. carnosolsäurehaltigem Extrakt beladen werden. Der Extrakt weist einen Carnosolsäureanteil von 0,6 Gew.-% auf. Die Nüsse werden hierzu als Träger in den Prozess eingeführt, der Extrakt wird in einem statischen Mischer mit überkritischem Kohlendioxid vermischt und als flüssige Komponente auf die Nüsse versprüht.

Die so behandelten Nüsse haben einen Carnosolsäuregehalt von 27 ppm. Im Ranzimattest ergeben sich beim Vergleich mit einer unbehandelten Probe folgende Induktionszeiten:

| Induktionszeit behandelte Probe | Induktionszeit unbehandelte Probe |
|---|---|
| 10,2 h | 6,3 h |

## Patentansprüche

1. Verfahren zur Verlängerung der Haltbarkeitsdauer der Früchte von Ölpflanzen, **gekennzeichnet durch** die Schritte:
- Bereitstellen zu imprägnierender Früchte, und
- Inkontaktbringen der zu imprägnierenden Früchte mit Carnosol und/oder Carnosolsäure in Gegenwart eines überkritischen Gases und bei einer Temperatur im Bereich von -10 °C bis 90 °C, bis die behandelten Früchte einen Gehalt an Carnosol und/oder Carnosolsäure von 0,1 bis 1000 ppm aufweisen.

2. Verfahren nach Anspruch 1,
**dadurch gekennzeichnet, dass** der Gehalt an Carnosol und/oder Carnosolsäure 1 bis 500 ppm beträgt.

3. Verfahren nach Anspruch 1 oder 2,
**dadurch gekennzeichnet, dass** die zu imprägnierenden Früchte in ganzer, halbierter, geviertelter, gehackter, gehobelter, geschroteter oder gemahlener Form bereitgestellt werden.

4. Verfahren nach einem der Ansprüche 1 bis 3,
**dadurch gekennzeichnet, dass** der Schritt des Imprägnierens unter Verwendung eines carnosol- und/oder carnosolsäurehaltigen Extraktes erfolgt.

5. Verfahren nach einem der vorhergehenden Ansprüche,
**dadurch gekennzeichnet, dass** das Gas Kohlendioxid, ein Kohlenwasserstoff, ein Ether, ein Inertgas, ein gasförmiges Oxid, Ammoniak oder eine Mischung aus zwei oder mehreren der vorgenannten Gase ist.

6. Verfahren nach Anspruch 5,
**dadurch gekennzeichnet, dass** der Kohlenwasserstoff Methan, Ethan, Propan, Butan, Ethen, Propen, ein halogenierter Kohlenwasserstoff oder eine Mischung aus zwei oder mehreren der vorgenannten Gase ist.

7. Verfahren nach Anspruch 5,
**dadurch gekennzeichnet, dass** das Inertgas Stickstoff, Helium, Argon oder eine Mischung aus zwei oder mehreren der vorgenannten Gase ist.

8. Verfahren nach Anspruch 5,
**dadurch gekennzeichnet, dass** das gasförmige Oxid Distickstoffoxid oder Schwefeldioxid oder eine Mischung daraus ist.

9. Verfahren nach einem der vorhergehenden Ansprüche,
**dadurch gekennzeichnet, dass** der Schritt des Imprägnierens bei einem Druck im Bereich von 5 bis 1000 bar erfolgt.

10. Verfahren nach Anspruch 9,
**dadurch gekennzeichnet, dass** der Schritt des Imprägnierens bei einem Druck im Bereich von 10 bis 500 bar erfolgt.

11. Verfahren nach Anspruch 9,
**dadurch gekennzeichnet, dass** der Schritt des Imprägnierens bei einem Druck im Bereich von 50 bis 350 bar erfolgt.

12. Verfahren nach einem der vorhergehenden Ansprüche,
**dadurch gekennzeichnet, dass** der Schritt des Imprägnierens bei einer Temperatur im Bereich von 40 °C bis 70 °C erfolgt.

13. Verfahren nach Anspruch 9,
**dadurch gekennzeichnet, dass** der Druck und die Temperatur für eine vorbestimmte Zeitdauer aufrechterhalten werden.

14. Verfahren zur Verlängerung der Haltbarkeitsdauer der Früchte von Ölpflanzen, **gekennzeichnet durch** die Schritte:
- Bereitstellen zu imprägnierender Früchte, und
- Zuführen eines carnosol- und/oder carnosolsäurehaltigen pflanzlichen Extraktes zu einem statischen Mischer,
- Vermischen des pflanzlichen Extraktes mit überkritischem Gas, insbesondere CO₂, und
- Sprühen der erhaltenen Mischung auf die zu imprägnierenden Früchte bei Atmosphärendruck, bis die behandelten Früchte einen Gehalt an Carnosol und/oder Carnosolsäure von 0,1 bis 1000 ppm aufweisen.

15. Verfahren nach einem der vorhergehenden Ansprüche,
**dadurch gekennzeichnet, dass** zum Imprägnieren Carnosol und/oder Carnosolsäure in einem Anteil von 0,001 Gew.-% bis 5 Gew.-% bezogen auf die Masse der zu imprägnierenden Früchte verwendet wird.

## Claims

1. A method for prolonging the storage life of the fruits of oil plants, **characterized by** the steps:
- providing fruits to be impregnated, and
- contacting the fruits to be impregnated with carnosol and/or carnosic acid in the presence of a supercritical gas and at a temperature in the range of -10°C to 90°C until the processed fruits have a content of carnosol and/or carnosic acid of 0.1 to 1000 ppm.

2. A method according to claim 1,
**characterized in that** the content of carnosol and/or carnosic acid is 1 to 500 ppm.

3. A method according to claim 1 or 2,
**characterized in that** the fruits to be impregnated are provided in whole, halved, quartered, chopped, planed, crushed or grounded form.

4. A method according to anyone of claims 1 to 3,
**characterized in that** the step of impregnating is performed using an extract containing carnosol and/or carnosic acid.

5. A method according to any of the preceding claims,
**characterized in that** the gas is carbon dioxide, a hydrocarbon, an ether, an inert gas, a gaseous oxide, ammonia or a mixture of two or more of said gases.

6. A method according to claim 5,
**characterized in that** the hydrocarbon is methane, ethane, propane, butane, ethylene, propylene, a halogenated hydrocarbon or a mixture of two or more of said gases.

7. A method according to claim 5,
**characterized in that** the inert gas is nitrogen, helium, argon or a mixture of two or more of said gases.

8. A method according to claim 5,
**characterized in that** the gaseous oxide is nitrous oxide or sulphur dioxide or a mixture thereof.

9. A method according to any of the preceding claims,
**characterized in that** the step of impregnating is effected at a pressure in the range of 5 to 1000 bar.

10. A method according to claim 9,
**characterized in that** the step of impregnating is effected at a pressure in the range of 10 to 500 bar.

11. A method according to claim 9,
**characterized in that** the step of impregnating is effected at a pressure in the range of 50 to 350 bar.

12. A method according to any of the preceding claims,
**characterized in that** the step of impregnating is effected at a temperature in the range of 40°C to 70°C.

13. A method according to claim 9,
**characterized in that** the pressure and the temperature are maintained for a predetermined period.

14. A method for prolonging the storage life of the fruits of oil plants, **characterized by** the steps:
- providing fruits to be impregnated, and
- delivering a vegetable extract containing carnosol and/or carnosic acid to a static mixer,
- mixing the vegetable extract with supercritical gas, in particular CO₂, and
- spraying the obtained mixture onto the fruits to be impregnated at atmospheric pressure until the processed fruits have a content of carnosol and/or carnosic acid of 0.1 to 1000 ppm.

15. A method according to any of the preceding claims,
**characterized in that** for impregnating, carnosol and/or carnosic acid are used in a proportion of 0.001 wt.% to 5 wt.% relative to the mass of the fruits to be impregnated.

## Revendications

1. Procédé pour prolonger la durée de conservation des fruits de plantes oléagineuses, **caractérisé par** les étapes suivantes :
- préparation des fruits à imprégner et
- mise en contact des fruits à imprégner avec du carnosol et/ou de l'acide carnosique en présence d'un gaz surcritique et à une température comprise entre -10 °C et 90 °C, jusqu'à ce que les fruits traités présentent une teneur en carnosol et/ou en acide carnosique comprise entre 0,1 et 1000 ppm.

2. Procédé selon la revendication 1,
**caractérisé en ce que** la teneur en carnosol et/ou en acide carnosique est comprise entre 1 et 500 ppm.

3. Procédé selon la revendication 1 ou 2,
**caractérisé en ce que** les fruits à imprégner sont préparés sous forme de fruits entiers, fruits coupés en deux, fruits coupés en quartiers, fruits hachés, fruits coupés en fines tranches, fruits concassés ou fruits moulus.

4. Procédé selon l'une des revendications 1 à 3,
**caractérisé en ce que** l'étape d'imprégnation consiste à utiliser un extrait présentant une teneur en carnosol et/ou en acide carnosique pour.

5. Procédé selon l'une des revendications précédentes,
**caractérisé en ce que** le gaz utilisé est du gaz carbonique, un hydrocarbure, un éther, un gaz inerte, un oxyde gazeux, de l'ammoniaque ou un mélange de deux ou plusieurs gaz choisis parmi les gaz précités.

6. Procédé selon la revendication 5,
**caractérisé en ce que** l'hydrocarbure utilisé est du méthane, de l'éthane, du propane, du butane, de l'éthen, du propène, un hydrocarbure halogéné ou un mélange de deux ou plusieurs gaz choisis parmi les gaz précités.

7. Procédé selon la revendication 5,
**caractérisé en ce que** le gaz inerte utilisé est de l'azote, de l'hélium, de l'argon ou un mélange de deux ou plusieurs gaz choisis parmi les gaz précités.

8. Procédé selon la revendication 5,
**caractérisé en ce que** l'oxyde gazeux utilisé est l'oxyde de diazote ou le dioxyde de soufre ou un mélange des deux.

9. Procédé selon l'une des revendications précédentes,
**caractérisé en ce que** l'étape d'imprégnation s'effectue sous une pression comprise entre 5 et 1000 bar.

10. Procédé selon la revendication 9,
**caractérisé en ce que** l'étape d'imprégnation s'effectue sous une pression comprise entre 10 et 500 bar.

11. Procédé selon la revendication 9,
**caractérisé en ce que** l'étape d'imprégnation s'effectue sous une pression comprise entre 50 et 350 bar.

12. Procédé selon l'une des revendications précédentes,
**caractérisé en ce que** l'étape d'imprégnation s'effectue sous une température comprise entre 40 °C et 70 °C.

13. Procédé selon la revendication 9,
**caractérisé en ce que** la pression et la température sont maintenues pendant une durée prédéterminée.

14. Procédé pour prolonger la durée de conservation des fruits de plantes oléagineuses, **caractérisé par** les étapes suivantes :
- préparation des fruits à imprégner et
- alimentation d'un mélangeur statique en extrait végétal présentant une teneur en carnosol et/ou en acide carnosique,
- mélange de l'extrait végétal en présence de gaz surcritique, en particulier du CO₂, et
- aspersion sous pression atmosphérique des fruits à imprégner avec le mélange obtenu jusqu'à ce que les fruits traités présentent une teneur en carnosol et/ou en acide carnosique comprise entre 0,1 et 1000 ppm.

15. Procédé selon l'une des revendications précédentes,
**caractérisé en ce que** l'imprégnation consiste à utiliser du carnosol et/ou de l'acide carnosique dans une proportion comprise entre 0,001 et 5 % en poids par rapport à la masse des fruits à imprégner.
